# EUROPÄISCHE PATENTANMELDUNG

(11) **EP 2 202 167 A1**
(43) Veröffentlichungstag der Anmeldung: **30.06.2010**
(21) Anmeldenummer: 09015425.3
(22) Anmeldetag: 14.12.2009
(51) Int. Cl.: B65D 19/10, B65D 21/02, B65D 6/26, F16B 2/24

(54) **Vorrichtung zur Sicherung von Gitterboxklappen**

(30) Priorität: 16.12.2008 DE 102008062227; 27.02.2009 DE 102009010986
(71) Anmelder: ferro pack e.K., 40599 Düsseldorf (DE)
(72) Erfinder: Nitsche, Titus, 40591 Düsseldorf (DE)
(74) Vertreter: Hauck Patent- und Rechtsanwälte

(57) **Zusammenfassung**

Es wird eine Vorrichtung zur Sicherung von Gitterboxklappen gegen unkontrolliertes Öffnen beschrieben. Die Vorrichtung besteht aus einem Materialstreifen mit einem Hauptabschnitt, einem von einem Ende des Hauptabschnittes abgewinkelten Klappenfixierabschnitt und einem vom anderen Ende des Hauptabschnittes abgewinkelten Gitterfixierabschnitt. Im Gitterfixierabschnitt ist ein Sicherungsschlitz ausgebildet, der zum Verriegeln der Vorrichtung mit einem Gitterelement einer Gitterboxseitenwand dient.

## Beschreibung

Die vorliegende Erfindung betrifft eine Vorrichtung zur Sicherung von Gitterboxklappen gegen unkontrolliertes Öffnen.

Gitterboxen, insbesondere Eurogitterboxen, sind bekannt. Es handelt sich hierbei um im Horizontalschnitt rechteckige Boxen oder Kästen, die einen geschlossenen Boden und vier mit einem Drahtgitter versehene Seitenwände aufweisen. Die entsprechenden Boxen sind oben offen. Eine Seitenwand wird von einer Klappe bzw. zwei übereinander angeordneten Klappen zum Öffnen der Gitterbox gebildet.

Bei einer Ausführungsform weist die Gitterbox auf einer Seitenwand eine einzige Klappe auf, die um eine untere Horizontalachse auf- und zuschwenkbar ist und im geschlossenen Zustand über zwei Riegel am Rahmen der Gitterbox fixierbar ist. Bei einer anderen Ausführungsform sind an einer Seitenwand zwei übereinander angeordnete Klappen vorgesehen, die ebenfalls um Horizontalachsen auf- und zuschwenkbar sind. Dabei sind die Gelenkachsen am unteren Ende der Klappen vorgesehen, und die Klappen werden im geschlossenen Zustand jeweils über zwei am Rahmen der Gitterbox vorgesehene Riegel verriegelt.

Die Gitterboxklappen sind im Einzelnen so ausgebildet, dass sie einen Rahmen aufweisen, der ein mittig angeordnetes Gitter umgibt. Der Rahmen besitzt aus der Gitterebene vorstehende Seitenholme. Bei der Ausführungsform einer Gitterbox, bei der zwei Klappen übereinander angeordnet sind, ist die obere Klappe schmaler ausgebildet als die untere Klappe. Während sich die obere Klappe in seitlicher Richtung bis zum Rahmen der Gitterbox erstreckt und diesen geringfügig überlappt, erstreckt sich die weitere untere Klappe über den Rahmen bis nahezu zu dessen seitlicher Begrenzung.

Derartige Gitterboxen, insbesondere Eurogitterboxen, sind aufeinanderstapelbar und eignen sich beispielsweise als gutes Lademittel für Schüttgut und sperrige, unverpackte Transportgüter. Zusätzlich zur guten Stapelfähigkeit zeichnen sie sich durch eine gute Stabilität aus.

Obwohl zum Verschließen der Gitterboxen entsprechende Riegel vorgesehen sind, mit denen die Gitterboxklappen am zugehörigen Rahmen der Gitterbox fixierbar sind, können sich solche Gitterboxklappen beim Transport und beim Stapel von derartigen Gitterboxen auf unkontrollierte Weise öffnen, wodurch sich Gefahrenzustände für die in der Gitterbox gelagerte Ware bzw. das Umfeld ergeben. Ein derartiges unkontrolliertes Öffnen kann insbesondere dadurch entstehen, dass schon beim Stapeln der Boxen die vorgesehenen Riegeleinrichtungen verformt bzw. beschädigt werden können, so dass sich die Klappen öffnen können, ferner dadurch, dass sich die Gitterboxen verziehen, so dass sich Riegel lösen. Auch geben verschlissene oder leicht beschädigte Verriegelungen keinen richtigen Halt mehr.

Der vorliegenden Erfindung liegt die Aufgabe zugrunde, eine einfach ausgebildete und einfach handhabbare Vorrichtung zur Sicherung von Gitterboxklappen gegen unkontrolliertes Öffnen zu schaffen.

Diese Aufgabe wird erfindungsgemäß mit einer Vorrichtung zur Sicherung von Gitterboxklappen gegen unkontrolliertes Öffnen gelöst, die aus einem Materialstreifen mit einem Hauptabschnitt, einem von einem Ende des Hauptabschnittes abgewinkelten Klappenfixierabschnitt und einem vom anderen Ende des Hauptabschnittes abgewinkelten Gitterfixierabschnitt mit einem darin ausgebildeten Sicherungsschlitz, der einen Gitterelementeinführabschnitt und einen winklig dazu verlaufenden Gitterelementsicherungsabschnitt aufweist, besteht.

Der erfindungsgemäßen Lösung liegt der Hauptgedanke zugrunde, ein zusätzliches Sicherungselement zu schaffen, das an derartigen Gitterboxen angebracht wird, um ein unkontrolliertes Öffnen der Gitterboxklappen, auch wenn sich diese im verriegelten Zustand befinden, zu verhindern. Dieses zusätzliche Sicherungselement lässt sich in einfacher Weise herstellen und in einfacher Weise handhaben. Es wird mit seinem Klappenfixierabschnitt an der zu sichernden Klappe und mit seinem Gitterfixierabschnitt am Gitter der benachbarten Seitenwand der Gitterbox fixiert. Hierbei wird ein entsprechendes Gitterelement der Seitenwand über den Gitterelementeinführabschnitt in den vorgesehenen Sicherungsschlitz eingeführt und im sich daran anschließenden Gitterelementsicherungsabschnitt fixiert, indem das Sicherungselement nach unten bewegt wird. Durch diese Bewegung wird das entsprechende Gitterelement bis zum Ende des Gitterelementsicherungsabschnittes geführt und dort positioniert.

Die erfindungsgemäß ausgebildete Vorrichtung (Sicherungselement) sichert daher die zugehörige Gitterboxklappe, indem sie diese zusätzlich an der benachbarten Seitenwand, d.h. über Eck, fixiert. Um die Gitterboxklappe öffnen zu können, wird die erfindungsgemäß ausgebildete Vorrichtung (Sicherungselement) nach oben bewegt, wodurch das Gitterelement, das zur Verriegelung bzw. Fixierung verwendet wird, im Gitterelementsicherungsabschnitt in eine dem Gitterelementeinführabschnitt gegenüberliegende Position gelangt, in der die Vorrichtung wieder vom Gitterelement gelöst werden kann, indem das Gitterelement durch den Gitterelementeinführabschnitt entfernt wird. Danach kann durch eine Schwenkbewegung der Klappenfixierabschnitt der Vorrichtung wieder von der Gitterboxklappe bzw. deren Holm gelöst werden. Die Gitterboxklappe kann dann auf normale Weise durch Öffnen der entsprechenden Riegelvorrichtung aufgeklappt werden.

Da, wie erwähnt, eine spezielle Ausführungsform einer Gitterbox (Eurogitterbox) zwei übereinander angeordnete Klappen aufweist, die eine unterschiedliche Breite besitzen und dadurch unterschiedlich ausgebildet sind, schlägt die erfindungsgemäße Lösung zwei unterschiedliche Ausführungsformen einer Sicherungsvorrichtung vor. Bei einer ersten Ausführungsform ist der Hauptabschnitt der Vorrichtung eben ausgebildet. Bei dieser Ausführungsform erstreckt sich daher von einem Ende des ebenen Hauptabschnittes der Klappenfixierabschnitt und vom anderen Ende des ebenen Hauptabschnittes der Gitterfixierabschnitt. Diese Ausführungsform kommt insbesondere bei der unteren Klappe der Eurogitterbox zur Anwendung, die sich seitlich über den Gitterboxrahmen erstreckt.

Bei der anderen Ausführungsform der Vorrichtung besitzt der Hauptabschnitt zwei unter einem Winkel angeordnete Abschnitte. Diese Ausführungsform kommt insbesondere bei der oberen Klappe der Eurogitterbox zur Anwendung, bei der die Klappe schmaler ausgebildet ist als die untere Klappe und den seitlichen Rahmen nur geringfügig überlappt. Hierbei ist es daher erforderlich, dass die Sicherungsvorrichtung den seitlichen Rahmen der Gitterbox umgreift, um mit ihrem Klappenfixierabschnitt den zugehörigen Holm der Gitterboxklappe ergreifen bzw. hintergreifen zu können. Dieses Umgreifen wird bei dieser Ausführungsform dadurch erreicht, dass der Hauptabschnitt zwei winklig zueinander angeordnete Abschnitte besitzt.

Wie erwähnt, weist der vom Hauptabschnitt abgewinkelte Gitterfixierabschnitt der erfindungsgemäß ausgebildeten Vorrichtung einen Sicherungsschlitz auf, der einen Gitterelementeinführabschnitt und einen winklig dazu verlaufenden Gitterelementsicherungsabschnitt aufweist. Dieser Gitterelementsicherungsabschnitt weist bei einer Ausführungsform winklig vom Gitterelementeinführabschnitt nach oben. Das Gitterelement gelangt in der Sicherungsstellung bis zum Schlitzende, das einen entsprechenden Anschlag bildet und dadurch die Vorrichtung am Gitterelement arretiert. Diese Ausführungsform hat jedoch den Nachteil, dass sie nur an einer Seite der Gitterboxklappe verwendbar ist. Um eine Verwendung auch an der anderen Seite der Gitterboxklappe zu ermöglichen, wird eine Ausführungsform bevorzugt, bei der sich der Gittetelementsicherungsabschnitt beidseitig vom Gitterelementeinführabschnitt erstreckt. Zur Verwendung an der anderen Seite der Gitterboxklappe wird daher die Sicherungsvorrichtung um 180° gedreht, so dass auch auf dieser Seite das Gitterelement dann im Gitterelementsicherungsabschnitt nach oben geführt werden kann.

Vorzugsweise bildet der Gitterfixierabschnitt mit dem Hauptabschnitt einen Winkel von etwa 90°. Im montierten Zustand der Sicherungsvorrichtung verläuft der Hauptabschnitt bzw. ein Teil des Hauptabschnittes parallel zur Seitenfläche bzw. Seitenwand der Gitterbox, die mit der Klappe einen rechten Winkel bildet. Der Gitterfixierabschnitt erstreckt sich dann über die Seitenfläche und ergreift das zur Fixierung dienende Gitterelement.

Bei der Ausführungsform der Erfindung, bei der der Hauptabschnitt zwei unter einem Winkel angeordnete Abschnitte aufweist, bilden diese beiden Abschnitte des Hauptabschnittes vorzugsweise miteinander einen Winkel von etwa 130°. Dieser Winkel stellt sicher, dass der Klappenfixierabschnitt der Sicherungsvorrichtung den entsprechenden Holm der Gitterboxklappe umgreifen bzw. hintergreifen und die entsprechende Parallelführung des einen Abschnittes des Hauptabschnittes mit der zugehörigen Seitenfläche bzw. Seitenwand erreicht werden kann. Da der Seiteholm der Gitterboxplatte gegenüber der zugehörigen Rahmenfläche des Gitterboxrahmens vorsteht, bilden die beiden Abschnitte des Hauptabschnittes keinen rechten Winkel miteinander, sondern vorzugsweise den erwähnten Winkel von etwa 130°.

Bei der Ausführungsform der erfindungsgemäß ausgebildeten Vorrichtung, bei der der Hauptabschnitt eben ausgebildet ist, bildet der Klappenfixierabschnitt mit dem Hauptabschnitt vorzugsweise einen Winkel von etwa 20°. Der Klappenfixierabschnitt kann auf diese Weise den zugehörigen Holm der Klappe sicher umgreifen, und die Parallelität zwischen Hauptabschnitt und der zugehörigen Seitenfläche der Box ist hergestellt.

Bei der vorstehend beschriebenen anderen Ausführungsform, bei der der Hauptabschnitt zwei Abschnitte besitzt, bildet der Klappenfixierabschnitt mit dem Hauptabschnitt vorzugsweise einen Winkel von etwa 55° (mit dem zugehörigen Abschnitt des Hauptabschnittes). Auch bei dieser Ausführungsform ist sichergestellt, dass der Holm der Klappe sicher umgriffen werden kann und die gewünschte Parallelität zwischen dem anderen Abschnitt des Hauptabschnittes und der Seitenfläche der Box hergestellt ist.

Der Gitterelementeinführabschnitt und der Gitterelementsicherungsabschnitt bilden vorzugsweise miteinander einen Winkel von etwa 90°. Mit anderen Worten, nach Einführen des Gitterelementes durch den Gitterelementeinführabschnitt in den Gitterelementsicherungsabschnitt wird die Verriegelung der Sicherungsvorrichtung durch vertikales Abwärtsbewegen derselben erreicht.

Die erfindungsgemäß ausgebildete Sicherungsvorrichtung besitzt einen Materialstreifen, der vorzugsweise aus Metallblech besteht. Es können jedoch auch hierfür geeignete andere Materialien Verwendung finden, beispielsweise geeignete Kunststoffe. Der Materialstreifen besitzt vorzugsweise eine Breite von 30-50 mm, insbesondere von 40 mm.

Der Gitterfixierabschnitt weist vorzugsweise eine Länge von 15-30 mm, insbesondere von 20 mm, auf, damit ein Gitterelement einfach und ohne große Kraftaufwendung in den Schlitz eingeführt und dort gesichert werden kann.

Die Erfindung wird nachfolgend anhand von zwei Ausführungsbeispielen in Verbindung mit der Zeichnung im Einzelnen erläutert. Es zeigen:
- Figur 1: eine räumliche Ansicht einer ersten Ausführungsform einer Sicherungsvorrichtung;
- Figur 2: einen Horizontalschnitt durch die Sicherungsvorrichtung der Figur 1;
- Figur 3: eine Vorderansicht der Sicherungsvorrichtung der Figuren 1 und 2;
- Figur 4: einen Horizontalschnitt durch eine zweite Ausführungsform einer Sicherungsvorrichtung;
- Figur 5: eine Vorderansicht der Sicherungsvorrichtung der Figur 4; und
- Figur 6: eine räumliche Darstellung der Sicherungsvorrichtung der Figuren 1 bis 3 im montierten Zustand an einer Gitterbox.

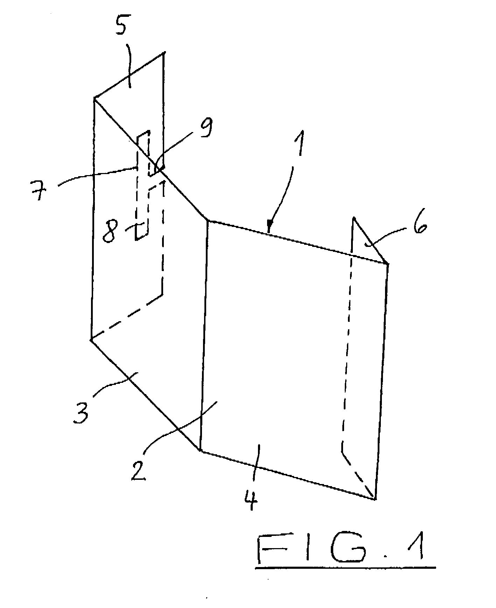

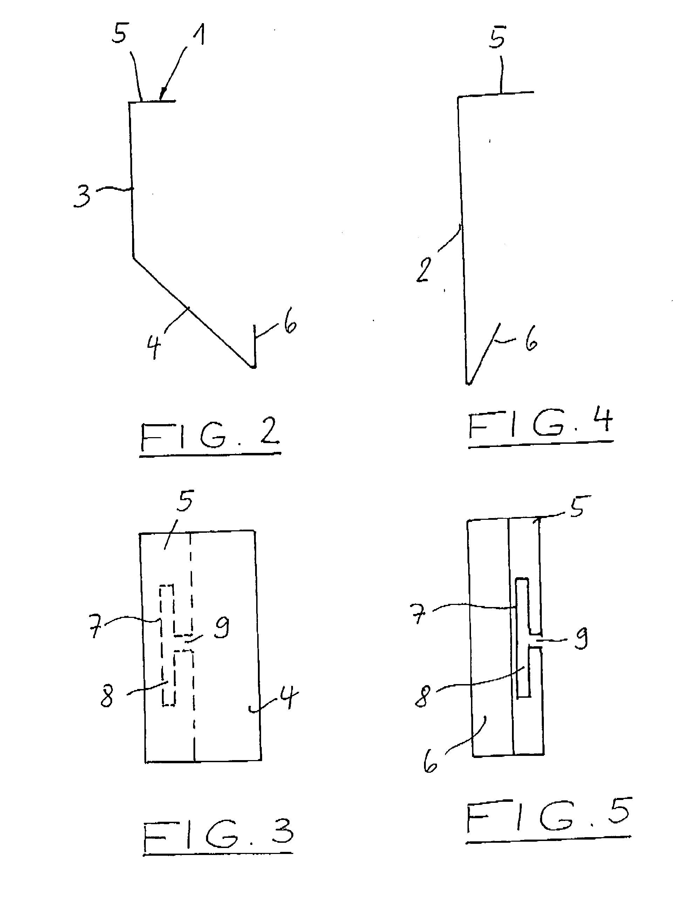

Die in Figur 1 dargestellte Sicherungsvorrichtung 1 besteht aus einem Metallstreifen mit einem Hauptabschnitt 2, der zwei einen Winkel miteinander bildende Abschnitte 3 und 4 aufweist. Die Sicherungsvorrichtung 1 besitzt ferner einen Klappenfixierabschnitt 6, der sich vom Ende des Abschnittes 4 des Hauptabschnittes 2 winklig erstreckt, sowie einen Gitterfixierabschnitt 5, der winklig vom Ende des Abschnittes 3 des Hauptabschnittes 2 verläuft. Im Gitterfixierabschnitt 5 befindet sich ein Sicherungsschlitz 7, der einen Gitterelementeinführabschnitt 9 aufweist, welcher rechtwinklig und beidseitig in einen Gitterelementsicherungsabschnitt 8 übergeht. Die Figuren 2 und 3 zeigen die Sicherungsvorrichtung 1 der Figur 1 im Horizontalschnitt und in der Vorderansicht. Die hier beispielhaft gezeigte und beschriebene Sicherungsvorrichtung in der Form eines Metallblechstreifens besitzt eine Höhe von 40 mm. Die beiden Abschnitte 3, 4 des Hauptabschnittes 2 weisen eine Breite von je 45 mm auf und sind unter einem Winkel von 130° angeordnet. Der Gitterelementeinführabschnitt 5 hat eine Breite von 20 mm und erstreckt sich unter einem Winkel von 90° zum Abschnitt 3 des Hauptabschnittes. Der Klappenfixierabschnitt besitzt eine Breite von 15 mm und ist unter einem Winkel von 55° zum Abschnitt 4 des Hauptabschnittes 2 angeordnet.

Der Gitterelementsicherungsabschnitt 8 des Sicherungsschlitzes 7 hat eine Länge von 25 mm und eine Breite von 5 mm, die auch der Gitterelementeinführabschnitt aufweist.

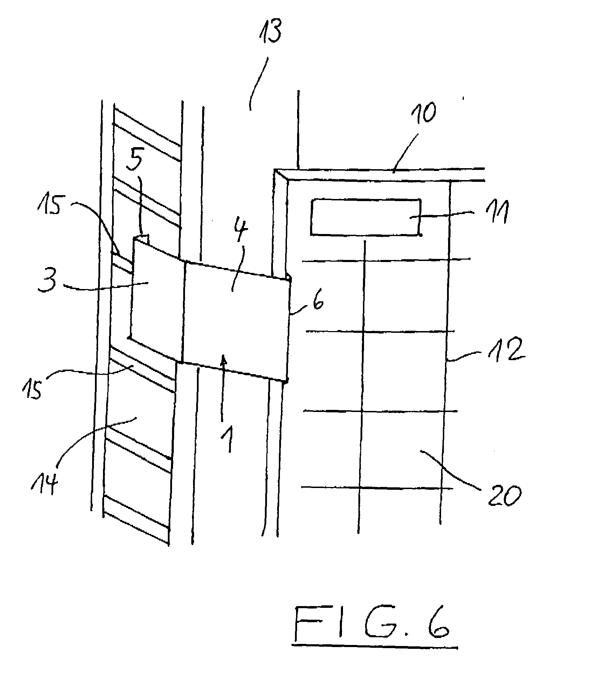

Figur 6 zeigt die Sicherungsvorrichtung 1 im an einer Gitterbox montierten Zustand. Die Gitterbox weist auf ihrer Vorderseite eine Gitterboxklappe 20 auf, die einen Außenholm 10 besitzt, welcher einen aus Gitterelementen 12 bestehenden Innenbereich umgibt. Die Gitterboxklappe 20 ist ferner über eine Riegeleinrichtung 11 am Rahmen 13 der Gitterbox verriegelt (nur schematisch dargestellt). Des Weiteren ist in Figur 6 eine sich vom Rahmen 13 in der Zeichnung nach links erstreckende und rechtwinklig zur Gitterboxklappe verlaufende Seitenwand 14 dargestellt, deren Innenfläche sich ebenfalls aus einzelnen Gitterelementen 15 zusammensetzt.

Die Sicherungsvorrichtung 1 umgreift bzw. hintergreift mit ihrem Klappenfixierabschnitt 6 den Außenholm 10 der Gitterboxklappe 20. Der sich an den Klappenfixierabschnitt 6 anschließende Abschnitt 4 des Hauptabschnittes 2 der Sicherungsvorrichtung erstreckt sich über die Vorderseite des Rahmens 13 und geht in den anderen Abschnitt 3 des Hauptabschnittes 2 über, welcher parallel zur Seitenwand 14 der Gitterbox verläuft. Der rechtwinklig vom Abschnitt 3 abgewinkelte Gitterfixierabschnitt 5 verläuft auch senkrecht zur Seitenwand 14 und nimmt in seinem Gitterelementsicherungsabschnitt des Sicherungsschlitzes 7 ein Gitterelement 15 auf, wobei das Gitterelement 15 gegen den oberen Rand des Gitterelementsicherungsabschnittes stößt.

Zum Anbringen wird die Sicherungsvorrichtung 1 so angeordnet, dass der Klappenfixierabschnitt 6 den Außenholm 10 umgreift. Die Vorrichtung wird dann über den Rahmen 13 gedreht bzw. geschwenkt, und der Abschnitt 5 wird in die Seitenwand 14 hineinbewegt, wobei das zugehörige Gitterelement 15 in den Gitterelementeinführabschnitt 9 des Schlitzes 7 geführt wird. Wenn das Gitterelement 15 vollständig eingeführt ist, wird die Sicherungsvorrichtung 1 nach unten bewegt, so dass das Gitterelement 15 in die obere Anschlagstellung im Gitterelementsicherungsabschnitt 8 des Schlitzes 7 gelangt. Zum Lösen der Sicherungsvorrichtung 1 werden die vorstehend geschilderten Schritte in umgekehrter Weise durchgeführt.

Die Figuren 4 und 5 zeigen eine weitere Ausführungsform einer Sicherungsvorrichtung, die beispielsweise bei der unteren Klappe einer Eurogitterbox Anwendung findet. Bei dieser Vorrichtung ist der Hauptabschnitt 2 eben ausgebildet. Im Übrigen gleicht die Vorrichtung im Wesentlichen der der Figuren 1 bis 3. Der Hauptabschnitt 2 besitzt eine Breite von 65 mm, während der Klappenfixierabschnitt eine Breite von 15 mm und der Gitterfixierabschnitt 5 eine Breite von 20 mm hat. Die Höhe der Vorrichtung beträgt ebenfalls 50 mm. Der Hauptabschnitt und der Gitterfixierabschnitt bilden miteinander einen Winkel von 90°. Der Klappenfixierabschnitt und der Hauptabschnitt bilden miteinander einen Winkel von 20°. Die entsprechende Schlitzmaße sind die gleichen wie bei der vorstehend beschriebenen Ausführungsform.

Wie vorstehend beschrieben, lässt sich eine derartige Sicherungsvorrichtung (Sicherungselement) einfach und schnell an einer Gitterbox anbringen und wieder von dieser entfernen. Die Vorrichtung kann mit einem einfachen Handgriff montiert werden und verhindert ein Aufspringen der Gitterboxklappe, selbst wenn die Verriegelung derselben nachgibt, da die Klappe durch die Vorrichtung gehalten wird. Ein ungewolltes Lösen der Sicherungsvorrichtung ist nahezu ausgeschlossen, da die Vorrichtung mit einem Gitterelement verriegelt ist. Die Vorrichtung ist wiederverwendbar und birgt keine Verletzungsgefahr.

Dadurch, dass der Gitterelementsicherungsabschnitt des Sicherungsschlitzes vom Gitterelementeinführabschnitt sowohl nach oben als auch nach unten verläuft, kann die Sicherungsvorrichtung auf beiden Seiten einer Gitterboxklappe verwendet werden (es ist lediglich ein Drehen um 180° erforderlich). Der Metallblechstreifen kann beispielsweise eine Materialstärke von 1,5 mm besitzen und galvanisch verzinkt sein.

## Patentansprüche

1. Vorrichtung (1) zur Sicherung von Gitterboxklappen (20) gegen unkontrolliertes Öffnen bestehend aus einem Materialstreifen mit einem Hauptabschnitt (2), einem von einem Ende des Hauptabschnittes (2) abgewinkelten Klappenfixierabschnitt (6) und einem vom anderen Ende des Hauptabschnittes (2) abgewinkelten Gitterfixierabschnitt (5) mit einem darin ausgebildeten Sicherungsschlitz (7); der einen Gitterelementeinführabschnitt (9) und einen winklig dazu verlaufenden Gitterelementsicherungsabschnitt (8) aufweist.

2. Vorrichtung nach Anspruch 1, **dadurch gekennzeichnet, dass** der Hauptabschnitt (2) eben ausgebildet ist.

3. Vorrichtung nach Anspruch 1, **dadurch gekennzeichnet, dass** der Hauptabschnitt (2) zwei unter einem Winkel angeordnete Abschnitte (3, 4) aufweist.

4. Vorrichtung nach einem der vorangehenden Ansprüche, **dadurch gekennzeichnet, dass** sich der Gitterelementsicherungsabschnitt (8) beidseitig vom Gitterelementeinführabschnitt (9) erstreckt.

5. Vorrichtung nach einem der vorangehenden Ansprüche, **dadurch gekennzeichnet, dass** der Gitterfixierabschnitt (5) mit dem Hauptabschnitt (2) einen Winkel von etwa 90° bildet.

6. Vorrichtung nach einem der Ansprüche 3 bis 5, **dadurch gekennzeichnet, dass** die beiden Abschnitte (3, 4) des Hauptabschnittes (2) miteinander einen Winkel von etwa 130° bilden.

7. Vorrichtung nach einem der Ansprüche 1, 2 oder 4, 5, **dadurch gekennzeichnet, dass** der Klappenfixierabschnitt (6) mit dem Hauptabschnitt (2) einen Winkel von etwa 20° bildet.

8. Vorrichtung nach einem der Ansprüche 1, 3 oder 4 bis 6, **dadurch gekennzeichnet, dass** der Klappenfixierabschnitt (6) mit dem Hauptabschnitt (2) einen Winkel von etwa 55° bildet.

9. Vorrichtung nach einem der vorangehenden Ansprüche, **dadurch gekennzeichnet, dass** der Gitterelementeinführabschnitt (9) und der Gitterelementsicherungsabschnitt (8) miteinander einen Winkel von etwa 90° bilden.

10. Vorrichtung nach einem der vorangehenden Ansprüche, **dadurch gekennzeichnet, dass** der Materialstreifen eine Breite von 30-50 mm, insbesondere 40 mm, besitzt.

11. Vorrichtung nach einem der vorangehenden Ansprüche, **dadurch gekennzeichnet, dass** der Gitterfixierabschnitt (5) eine Länge von 15-30 mm, insbesondere 20 mm, hat.

12. Vorrichtung nach einem der vorangehenden Ansprüche, **dadurch gekennzeichnet, dass** der Materialstreifen aus Metallblech besteht.
